# EUROPÄISCHE PATENTSCHRIFT

(11) **EP 0 809 962 B1**
(45) Veröffentlichungstag und Bekanntmachung des Hinweises auf die Patenterteilung: **29.09.1999**
(21) Anmeldenummer: 97107065.1
(22) Anmeldetag: 29.04.1997
(51) Int. Cl.: A47J 45/06

(54) **Stielgriff**
Handle
Poignée à manche

(30) Priorität: 29.05.1996 DE 19621524; 20.12.1996 DE 19653228
(43) Veröffentlichungstag der Anmeldung: 03.12.1997
(73) Patentinhaber: Gebr. Dingerkus GmbH & Co. KG, 57439 Attendorn (DE)
(72) Erfinder: Lamers, Heinz-Günter, 57439 Attendorn (DE)
(74) Vertreter: Köchling, Conrad-Joachim

(56) Entgegenhaltungen:
- EP-A- 0 247 229
- GB-A- 2 086 981
- GB-A- 2 171 450
- US-A- 1 490 568
- US-A- 3 838 680

## Beschreibung

Die Erfindung betrifft einen Stielgriff für ein Geschirr, insbesondere Brat-, Back- oder Kochgeschirr, der mittels eines Befestigungselementes an der Wandung eines Geschirrs befestigbar ist, wobei der Stielgriff oder ein wesentlicher Teil des Stielgriffes um eine Hochachse aus einer vom Geschirr quer abragenden Gebrauchslage in eine etwa parallel oder tangential zur Geschirrwandung gerichtete oder in eine die Mündung der Fläche des Geschirrs übergreifende Ruhelage schwenkbar ist, der Stielgriff aus einem am Geschirr befestigbaren Sockelteil und einer am Sockelteil schwenkbeweglich gehalterten Handhabe besteht, das Sockelteil eine Führungsfläche mit ringförmiger Führungsnut oder ringförmigem Führungsvorsprung aufweist, die zentrisch von der Schwenkachse durchsetzt ist, und die Handhabe an ihrem mit dem Sockelteil verbindbaren Endbereich eine dazu passende Führungsfläche mit Führungsvorsprung oder Führungsnut aufweist, wobei die ineinander greifenden und aneinanderliegenden Führungselemente durch ein die Schwenkachse bildendes Verbindungsmittel zusammen gehalten sind.

Aus der EP 02 47 229 A1 ist ein derartiger Stielgriff bekannt.

Hierbei ist an der Griffhandhabe ein rohrförmiger Vorsprung und an dem topfseitigem Befestigungselement ebenfalls ein Vorsprung angeordnet, die ineinandergreifen, wobei deren Lage zueinander durch die Nut und den in diese eingesetzten Sprengring gesichert ist. Diese Ausbildung ist zwar brauchbar, jedoch tritt in der Praxis ein erhebliches Problem auf. Sofern nämlich ein wackelfreier Sitz des Stielgriffes am Befestigungsteil erreicht werden soll, so ist eine äußerst enge Passung der Vorsprünge erforderlich. Dies bedeutet einen hohen Fertigungsaufwand, wobei zudem durch die enge Passung eine Schwergängigkeit der Drehbeweglichkeit der Teile zueinander bewirkt wird.

Ausgehend von diesem Stand der Technik liegt der Erfindung die Aufgabe zugrunde, einen Stielgriff gattungsgemäßer Art zu schaffen, bei dem eine einwandfreie Zentrierung und Führung zwischen Sockelteil und schwenkbeweglicher Handhabe gewährleistet ist, auch wenn die zusammenwirkenden Einzelteile Fertigungstoleranzen aufweisen.

Zur Lösung dieser Aufgabe wird vorgeschlagen, daß die Schwenkachse von einer Lagerbuchse gebildet ist, die mit einem Flansch an der Außenseite der Handhabe sich abstützt, Handhabe und das Sockelteil durchgreift und durch ein sich außenseitig des Sockelteils abstützendes Befestigungsmittel fixierbar ist, daß das Befestigungsmittel aus einem ringförmigen oder zylindrischen Federelement und einem dieses axial durchgreifenden Kopfbolzen, besteht, wobei das Federelement eine gewölbte Federscheibe ist, deren Mittelbereich fest gegen die Unterseite der Lagerbuchse mittels des Kopfbolzens anziehbar ist und deren Randbereich sich unter Vorspannung an der Unterseite des Sockelteils abstützt.

Durch diese Anordnung wird einerseits eine geeignete Führung über den gesamten Schwenkweg erreicht, wobei schon durch die ineinandergreifenden Führungselemente die Stabilität der Verbindung zwischen Stielgriff und Geschirrteile gewährleistet ist. Darüber hinaus kann die Lagerbuchse mit dem Befestigungsmittel in geeigneter Weise an dem Sockelteil fixiert werden und fest an diesem befestigt werden, wobei die Lagerbuchse das Drehlager für die Handhabe bildet. Diese Anordnung gestattet eine einfache Montage, wobei zudem gewährleistet ist, daß die Einzelteile austauschbar sind, insbesondere die Lagerbuchse oder die Handhabe, sofern eines dieser Teile beschädigt oder funktionsuntüchtig wird.

Desweiteren wird durch das Buchsenteil eine einwandfreie Zentrierung und Führung gewährleistet. Das axiale Spiel in diesem Drehgelenk wird durch die Ausbildung des Federelementes, insbesondere in Form einer Tellerfeder, eliminiert, wobei ein gewisser Stoßdämpfereffekt erreicht wird. Mittels des Befestigungsmittels wird die Verbindung auf die gewünschte Vorspannung gebracht, so daß trotz toleranzbehafteter Fertigung der Einzelteile ein fester Sitz erreichbar ist und dabei die Drehbeweglichkeit gewährleistet ist.

Bevorzugt ist zudem vorgesehen, daß die Hochachse parallel zur Mittelachse des Geschirrs gerichtet oder leicht gegenüber der Mittelachse geneigt ist.

Regelmäßig sind Geschirrteile kreisrund ausgebildet, so daß die Mittelachse dieser Kreisform praktisch die Mittelachse des Geschirrs bildet. Zur Mittelachse des Geschirrs soll die Hochachse, die die Schwenkachse des Stielgriffes bildet, parallel gerichtet oder leicht gegenüber der Mittelachse geneigt sein.

Bevorzugt ist zudem vorgesehen, daß der Stielgriff in den beiden möglichen Extremlagen arretierbar ist.

Desweiteren ist besonders bevorzugt, daß in die Lagerbuchse an ihrem mit Flansch versehenen Ende ein Federelement und ein unter Vorspannung des Federelementes axial zur Lagerbuchse verschiebliches Bedienteil, eingesetzt ist, das von einem Verriegelungsstift quer durchsetzt ist, wobei der Verriegelungsstift die Lagerbuchse quer zu ihrer Längsachse in parallel zu ihrer Längsachse gerichteten Langlöcher durchgreift und die Lagerbuchse radial überragt, sowie in axiale Arretierungsnuten radial umgebenden Bereiches der Handhabe eingreift, so daß bei entlastetem Bedienteil die Schwenkbeweglichkeit der Handhabe in der Gebrauchslage oder in der Ruhelage unterbunden ist und bei axial belastetem und verschobenem Bedienteil die Enden des Verriegelungsstiftes außer Eingriff von den axialen Arretierungsnuten sind und die Handhabe um die Lagerbuchse schwenkbar ist.

Dabei ist vorzugsweise vorgesehen, daß das Bedienteil ein zylindrischer Druckknopf ist.

Durch das gefederte Bedienteil (Druckknopf mit Rasterstift) ist das Ausklinken und Einrasten der Drehbaren Handhabe den beiden Sollagen sicher und einfach gewährleistet, und die Funktionselemente sind einfach bedienbar, wobei die Anordnung des Bedienteils vorzugsweise Oberseitig der Griffausbildung vorgenommen ist, so daß der Benutzer dieses Bedienteil bei mit der Hand erfaßtem Griff mit dem Daumen der Hand bedienen kann.

Besonders bevorzugt ist zudem vorgesehen, daß die aneinanderliegenden Führungsflächen von Sockelteil und Handhabe sowie von Flansch und Handhabe mit reibungsminderndem Material, beschichtet oder zwischen den Flächen Gleitscheiben aus solchem Material angeordnet sind.

Dabei ist bevorzugt, daß das reibungsmindernde Material PTFE ist.

Beispielsweise durch zwei PTFE-Scheiben (Polytetrafluoräthylen-Scheiben), die an der Ober- und Unterseite im Bereich der Führungsflächen an der Handhabe oder am Sockelteil angeordnet sind, wird trotz entsprechender Vorspannung der Verbindung der Teile eine gewünschte leichtgängige Drehbarkeit der Handhabe gewährleistet.

Obwohl bei üblichen Geschirren, beispielsweise Pfannen oder dergleichen, die Anordnung vorzugsweise so getroffen wird, daß der Stielgriff in der Ruhelage etwa tangential an der Umfangswandung des Geschirrteiles außen anliegt, ist auch eine Verstellung des Stielgriffes in der Weise möglich, daß der Stielgriff in der Gebrauchslage quasi radial von dem entsprechenden Geschirrteil abragt, während in der Ruhelage der Stielgriff nach innen geschwenkt ist, so daß er quasi über der Mündung des Geschirrs oder, sofern es sich um ein Deckelteil handelt, über der Deckelfläche angeordnet ist, so daß nur unwesentliche radiale Überstände verbleiben. Die außerhalb des Geschirrteiles verbleibenden Überstände sind nicht größer als bei üblichen Bügelgriffen oder dergleichen, so daß insbesondere bei der Anordnung in Verpackungen oder dergleichen diese überstehenden Bereiche in den Ecken der Verpackung anzuordnen sind, so daß kein zusätzlicher Platzbedarf innerhalb der Verpackung besteht.

Um einen wackelfreien Sitz auch bei auftretenden Fertigungstoleranzen in der Gebrauchslage zu erreichen, wird vorgeschlagen, daß das Sockelteil und der Handhabe aus einem Duroplast und die Lagerbuchse aus Thermoplast besteht, wobei der Außendurchmesser der Lagerbuchse in dem in die Mittellochung der Handhabe des Stielgriffs durchgreifenden Bereich kleineren Durchmesser als die Mittellochung aufweist, so daß die Teile mit radialem Spiel ineinandergreifen.

Dadurch, daß das Sockelteil, der Handhabe und auch die Lagerbuchse mit samt Bedienteil aus Kunststoff gefertigt sind, ist eine kostengünstige Fertigung möglich. Durch den Einsatz von Duroplastmaterial für das Sockelteil und den Handhabe wird eine dickwandige Ausbildung ermöglicht, die eine entsprechend tragfähige Ausbildung der ineinandergreifenden Teile (ringförmige Nut und ringförmige Führungsflächen) ermöglicht, während die Lagerbuchse relativ dünnwandig hergestellt werden kann, indem zur Herstellung Thermoplastmaterial eingesetzt wird.

Dadurch, daß die Lagerbuchse aus Thermoplastmaterial hergestellt ist, tritt über längere Zeitdauer der Effekt ein, daß dieses Teil sich im Durchmesser geringfügig vergrößert, weil das Material infolge Wasseraufnahme geringfügig aufquillt. Hierdurch wäre eine eindeutige Passung nicht gewährleistet und möglicherweise ein Verklemmen der Teile ineinander bei zu genauer Anpassung der Teile aneinander die Folge. Um dieses zu Vermeiden, ist der Außendurchmesser der Lagebuchse um das mögliche Toleranzfeld kleiner als der Innendurchmesser der Mittellochung, die die Lagerbuchse aufnimmt. Die Teile sind damit im Herstellungszustand mit radialen Spiel zueinander angeordnet und greifen ineinander. Die Lagerbuchse übernimmt dabei keine oder nur unwesentliche Führungsaufgaben, weil die eigentliche Führung allein durch die ringförmige Führungsnut und die entsprechenden ringförmigen Führungsflächen erreicht wird, wodurch quasi ein Drehkranz gebildet ist, der auch auf Dauer funktionstüchtig bleibt, weil durch die Verwendung von Duroplast als Herstellungsmaterial eine Toleranzveränderung über längere Gebrauchszeiten nicht eintritt. Insgesamt erfolgt die Fixierung durch das Anschrauben der Federscheibe unterseitig des Sockelteiles , so daß eine feste Vorspannung der Verbindung erreicht ist, dennoch aber eine gewisse Federung möglich ist. Infolge des ausreichenden Spiels zwischen Lagerbuchse und dem Aufnahmebereich für die Lagerbuchse in der Lochung der Handhabe wird eine dauerhafte Funktion sichergestellt, auch wenn das Thermoplastmaterial der Lagerbuchse über längere Gebrauchsdauer aufquellen sollte.

Um eine drehfeste Anordnung der Lagerbuchse im Bereich der Lochung der Handhabe in einfacher Weise zu realisieren, wird vorgeschlagen, daß das die Gewindeausbildung aufweisende Ende der Lagerbuchse im Querschnitt als Polygon ausgebildet und der Einsatzbereich in der Lochung des Sockelteils formgleich ausgebildet ist.

Um eine spielfreie Halterung des Verriegelungsstiftes in den Langlöchern der Lagerbuchse zu gewährleisten, ist zudem vorgesehen, daß die Langlöcher der Lagerbuchse mindestens in dem ihrer Mündung (der Lagerbuchse) naheliegenden Endbereich konisch oder keilförmig eingeengt sind und der Verriegelungsstift spielfrei in die Einengung eingreift.

Durch diese Ausbildung wird eine spielfreie Anordnung erreicht, wobei zudem ein Toleranzausgleich möglich ist, sofern die Langlöcher sich aufgrund der Quellneigung des Thermoplastmaterials einengen.

Um eine spielfreie Anordnung des Verriegelungsstiftes in den Arretierungsnuten des die Lagerbuchse radial umgebenden Bereiches der Handhabe zu erreichen und dennoch eine leichte Montage zu ermöglichen, ist vorgesehen, daß die Arretierungsnuten des die Lagerbuchse radial umgebenden Bereiches der Handhabe paarweise einander gegenüberliegend angeordnet sind, wobei ein solches Paar von Arretierungsnuten, in welchem der Verriegelungsstift in der eingeschwenkten Ruhelage mit Spiel eingreift, durch Axialnuten gebildet ist, die parallel verlaufende Nutflanken aufweisen, während ein zweites Paar von Arretierungsnuten, in welches der Verriegelungsstift in der ausgeschwenkten Gebrauchslage eingreift, durch axial gerichtete Nuten gebildet ist, die zueinander konvergierende Nutflanken mindestens im der Griffoberseite zugewandten Endbereich aufweisen,zwischen welche der Verriegelungsstift spielfrei einführbar ist.

Das eine Paar von Arretierungsnuten, welches parallel verlaufende Nutflanken aufweist, dient zur Montage und wird auch nach Erfolg der Montage zur Aufnahme des Verriegelungsstiftes in der eingeschwenkten Ruhelage benutzt. Hierbei ist ein ausreichendes Spiel zwischen Nutflanken und Verriegelungsstift erwünscht, um die leichte Montage zu ermöglichen, wobei in der eingeschwenkten Lage auch keine spielfreie Anordnung erreicht wird, was auch nicht notwendig ist. In der Gebrauchslage, also bei ausgeschwenktem Griff, sitzen die Enden des Verriegelungsstiftes in dem zweiten Nutpaar, welches konvergierende Nutflanken aufweist, zwischen welchen die Enden des Verriegelungsstiftes spielfrei einführbar sind, so daß in der Gebrauchslage eine spielfreie Anordnung der Teile zueinander gewährleistet und erreicht ist.

Ausführungsbeispiele der Erfindung sind in der Zeichnung dargestellt und im folgenden näher beschrieben.

Es zeigt:
- Fig. 1 bis 3: ein Geschirr mit in Gebrauchslage befindlichem Stielgriff in Seitenansicht, teilweise geschnitten, in Draufsicht und in Unteransicht (als Detail);
- Fig. 4 und 5: eine Seitenansicht und eine Draufsicht auf ein Geschirr mit in Ruhelage befindlichem Stielgriff;
- Fig. 6: ein Geschirr mit Stielgriff in Explosionsdarstellung;
- Fig. 7: die wesentlichen Elemente des Stielgriffes in Ansicht, im Mittellängsschnitt gesehen;

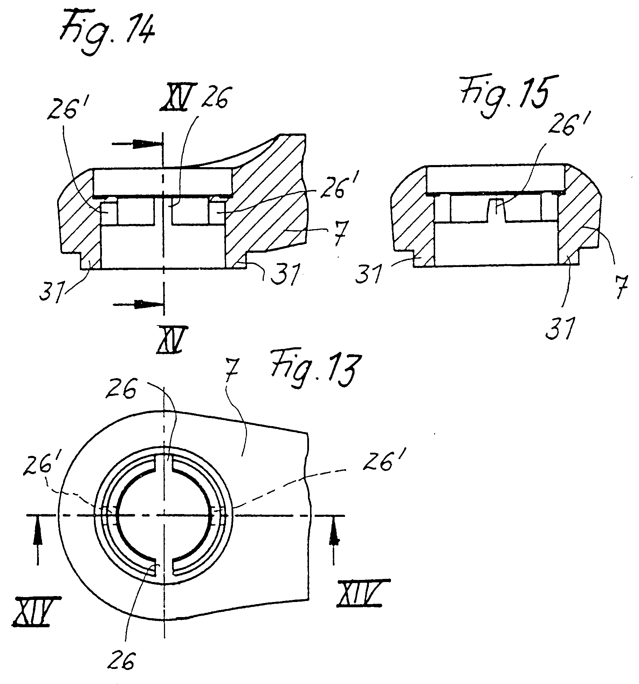

- Fig. 8 bis 12: eine Einzelheit in unterschiedlichen Ansichten;
- Fig. 13 bis 15: eine weitere Einzelheit in unterschiedlichen Ansichten.

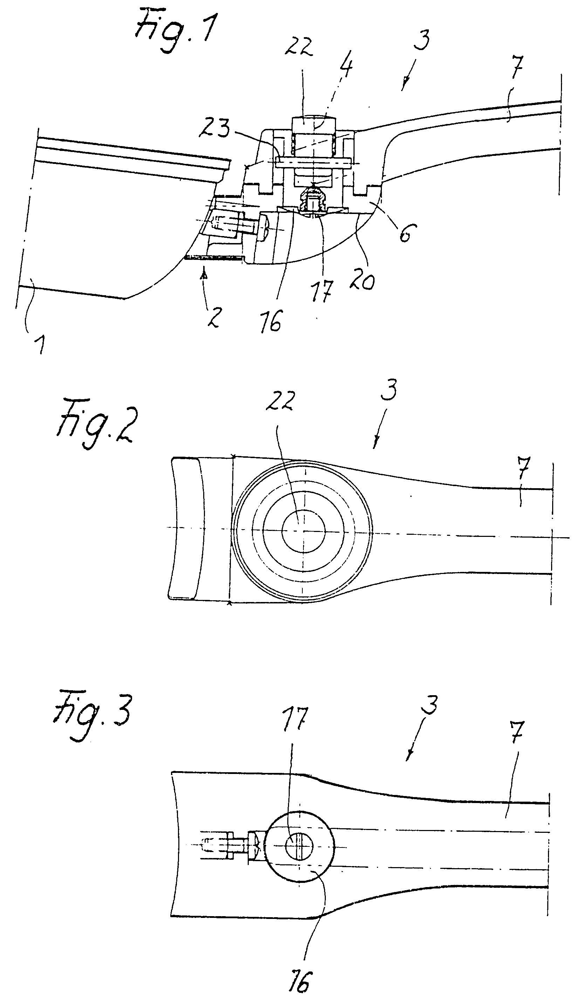

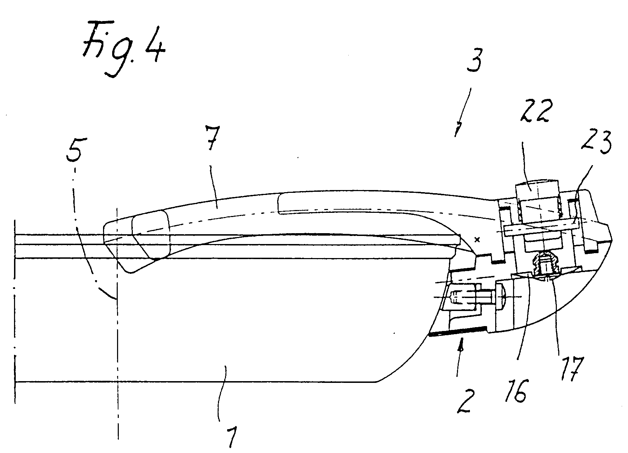

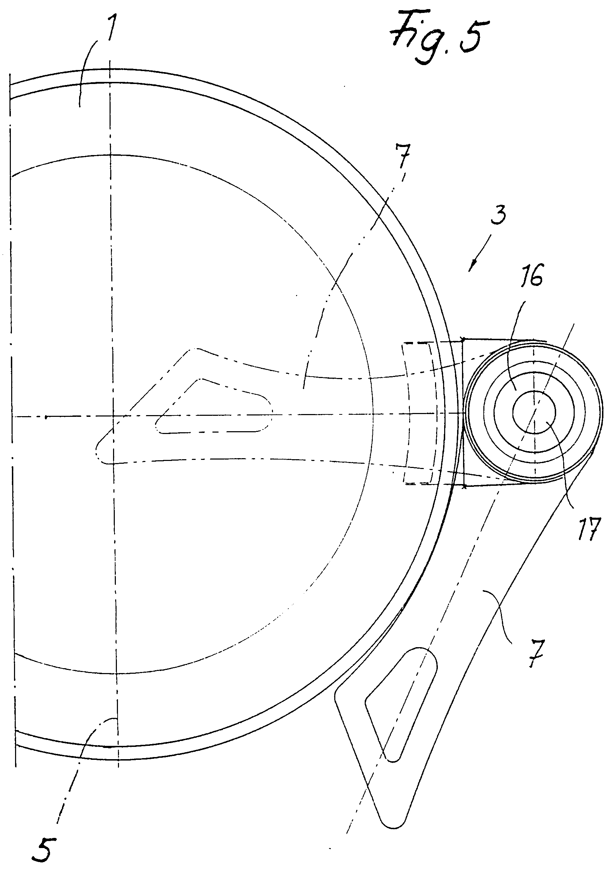

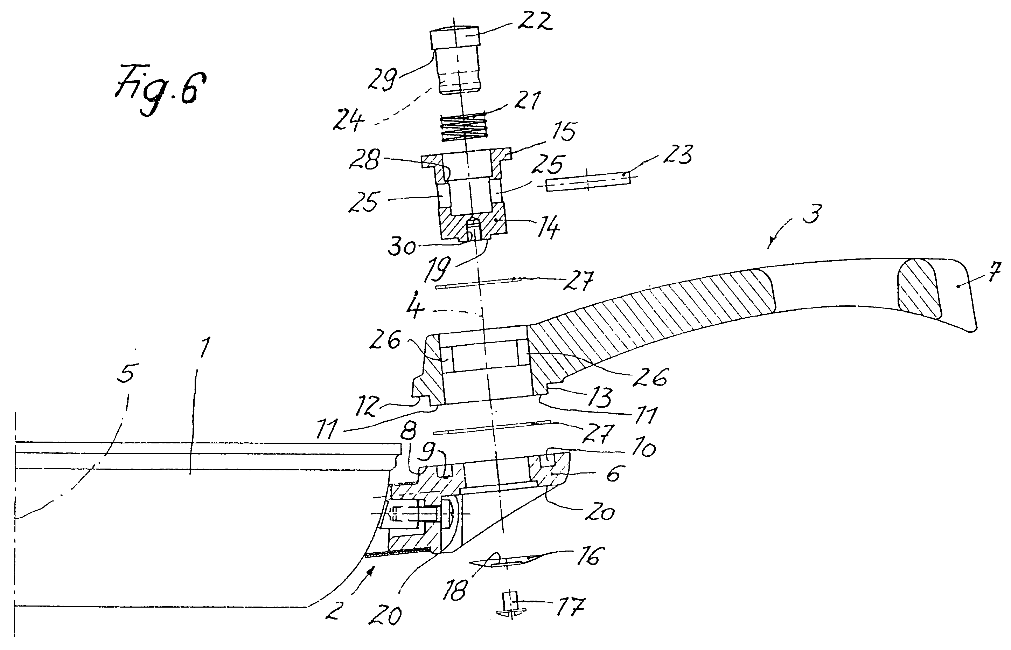

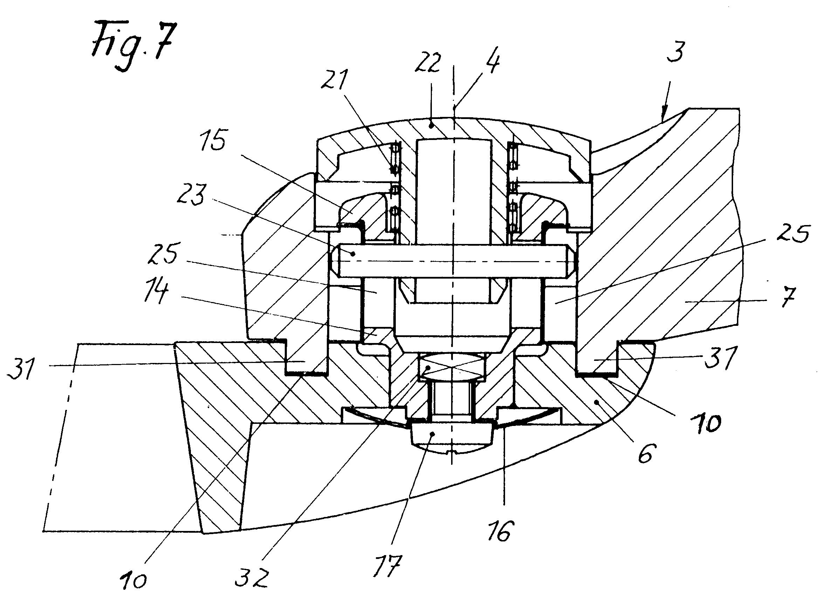

In der Zeichnung ist ein Stielgriff für ein Geschirrteil 1, im Ausführungsbeispiel eine Bratpfanne, gezeigt. Der Stielgriff ist mittels eines Befestigungselementes 2 an der Seitenwandung des Geschirrteiles 1 befestigbar. Der Stielgriff 3 oder ein wesentlicher Teil des Stielgriffes ist um eine Hochachse 4 aus einer vom Geschirr 1 quer abragenden Gebrauchlage (vergleiche Figur 1 bis 3) in eine etwa parallel oder tangential zur Geschirrwandung gerichtete Ruhelage verschwenkbar, wie in Figur 4 und 5 in durchgezogenen Linien gezeigt, oder auch in eine die Mündung oder Fläche des Geschirrs 1 übergreifende Ruhelage schwenkbar, wie in Figur 5 in strichpunktierten Linien gezeigt ist. Die Hochachse 4 kann parallel zur Mittelachse 5 des Geschirrs 1 gerichtet sein oder leicht gegenüber der Mittelachse geneigt sein, wie insbesondere aus der Darstellung gemäß Figur 6 ersichtlich ist. Der Stielgriff 3 besteht vorzugsweise aus einem an der Wandung des Geschirrs 1 befestigbaren Sockelteil 6 und einer am Sockelteil 6 schwenkbeweglich (um die Achse 4) gehalterten Handhabe 7.

Das Sockelteil 6 weist Führungsflächen 8, 9 mit ringförmiger Führungsnut 10 auf, die zentrisch von der Schwenkachse 4 durchsetzt ist, während die Handhabe 7 an ihrem mit dem Sockelteil 6 verbindbaren Endbereich eine dazu passende Führungsfläche 11 bzw. 12 mit Führungsvorsprung 13 aufweist. Die Sollposition ist beispielsweise aus Figur 1 und Figur 4 ersichtlich Dabei sind die ineinander greifenden und aneinander anliegenden Führungselemente durch ein die Schwenkachse oder Bestandteil der Schwenkachse bildendes Verbindungsmittel zusammengehalten.

Bevorzugt ist die Schwenkachse 4 von einer Lagerbuchse 14 gebildet, die mit einem Flansch 15 sich an der Außenseite (oben) der Handhabe 7 abstützt. Die Anordnung ist so getroffen, daß der Flansch 15 praktisch bündig in der Bodenseite der Handhabe 7 liegt. Die Lagerbuchse 14 durchgreift das Sockelteil 6 und ist durch ein sich außenseitig des Sockelteils 6 abstützendes Befestigungsmittel fixierbar.

Das Befestigungsmittel besteht aus einem ringförmigen Federelement, vorzugsweise in Form einer gewölbten Federscheibe, und einem dieses axial durchgreifenden Kopfbolzen 17, vorzugsweise einer Kopfschraube, die in eine Gewindeausbildung 30 am Boden der Lagerbuchse 14 einschraubbar ist. Das als gewölbte Federscheibe ausgebildete Federelement 16 wird in der Montagesollposition mit seinem abgesetzten Mittelbereich 18 fest gegen die Unterseite 19 der Buchse 14 mittels des Befestigungsmittels 17 angezogen. Dabei stützt sich der Randbereich des Federelementes 16 unter Vorspannung an der Unterseite des Sockelteil bei 20 ab. Auf diese Weise wird trotz toleranzbehafteter Einzelteile eine feste Fixierung der Teile aneinander erreicht, wobei eine gewisse Federung der Handhabe 7 gewährleistet ist und dennoch die Drehbarkeit nicht beeinträchtigt ist.

Der Stielgriff 3, insbesondere die Handhabe 7 ist in den beiden möglichen Extremlagen arretierbar. Im Ausführungsbeispiel ist dazu in die Lagerbuchse 14 an ihrem mit Flansch 15 versehenen Ende ein Federelement 21 und ein unter Vorspannung des Federelementes 21 axial zur Lagerbuchse 14 verschiebliches in diese eingreifendes Bedienteil 22 in Form eines zylindrischen Druckknopfes vorgesehen. Letzterer ist von einem Verriegelungsstift 23 durchsetzt, der in eine radiale Durchgangsbohrung 24 des Bedienteiles eingesetzt werden kann. Der Verriegelungsstift 23 durchgreift die Lagerbuchse 14 quer zu ihrer Längsachse in parallel zu ihrer Längsachse gerichteten Langlöchern 25, wodurch der Stellweg in Achsrichtung der Achse 4 des Bedienteiles 22 begrenzt ist. Der Verriegelungsstift 23 überragt die Lagerbuchse 14 radial. Mit den radial überstehenden Enden ist der Arretierungsstift 23 in Arretierungsnuten 26 des die Lagerbuchse 14 umgebenden Bereiches der Handhabe 7 eingesetzt, so daß bei entlastetem Bedienteil, wie beispielsweise aus Figur 1 und Figur 4 ersichtlich, die Schwenkbeweglichkeit der Handhabe 7 unterbunden ist, da die Enden des Verriegelungsstiftes 23 in den axialen Arretierungsnuten 26 einsitzen. Bei axial belastetem und in Zeichnungsfigur 6 nach unten verschobenem Bedienteil 22 sind die Enden des Verriegelungsstiftes 23 außer Eingriff von den axialen Arretierungsnuten 26, so daß die Handhabe 7 um die Lagerbuchse 14 schwenkbar ist. Die Betätigung des Bedienelementes 22 kann in einfacher Weise von dem Benutzer erfolgen, in dem dieser die Handhabe 7 mit der Hand umgreift und mit dem Daumen der gleichen Hand das Bedienelement 22 eindrückt (betätigt).

Die aneinander liegenden Führungsflächen 9, 11 von Sockelteil 6 und Handhabe 7 sind dadurch besonders gleitfähig gemacht, daß zwischen diesen Flächen Gleitscheiben 27 aus PTFE angeordnet sind.

Das Federelement 21 ist im Ausführungsbeispiel als Schraubenfeder ausgebildet, wobei die Schraubenfeder sich einerseits an einer Schulter 28 der Lagerbuchse 14 abstützt und andererseits an einer entsprechenden Stützfläche 29 des Bedienelementes 22.

Zur Montage des Stielgriffes kann zunächst das Befestigungselement 2 an der Wandung des Geschirrs 1 angebracht werden oder aber es kann zunächst die Komplettierung des Griffes erfolgen, die nachstehend beschrieben wird, und dann kann der komplette Griff an der Wandung des Geschirrteiles 1 angebracht werden. Die Komplettierung des Stielgriffes 3 erfolgt in folgender Weise. Es wird zunächst die Scheibe 27 in die Nut 10 des Sockelteiles 6 eingelegt, dann die Handhabe 7 mit den entsprechenden Passflächen aufgesetzt und die weitere Gleitscheibe 27 aufgelegt. Die obere Gleitscheibe 27 liegt dabei zwischen dem Flansch 15 der Buchse 14 und der Oberseite der Handhabe 7. Zuvor ist die Buchse 14 durch Einsatz der Teile 21, 22 und 23 komplettiert worden. Diese Teile sind in die Handhabe 7 lagerichtig eingebracht. Die endgültige Fixierung erfolgt dann durch Auflegen des Federelementes 16 und Anbringen des Befestigungselementes 17 (einschrauben in die Gewindebohrung 30).

Insbesondere in der Zeichnungsfigur 7 ist ein Stielgriff 3 für ein Geschirr gezeigt, der mittels eines Befestigungselementes an der Wandung des Geschirrs befestigbar ist. Der Stielgriff 3 ist um eine Hochachse 4 aus einer vom Geschirr quer abragenden Gebrauchslage in eine dazu parallele oder tangential zur Geschirrwandung gerichtete oder in eine die Mündung oder Fläche des Geschirrs übergreifende Ruhelage schwenkbar. Der Stielgriff 3 besteht im wesentlichen aus einem am Geschirr befestigbaren Sockelteil 6 und einer am Sockelteil schwenkbeweglich gehalterten Handhabe 7. Das Sockelteil 6 weist eine ringförmige Führungsnut 10 auf, die zentrisch von der Schwenkachse durchsetzt ist. Die Handhabe 7 weist an ihrem mit dem Sockelteil 6 verbindbaren Endbereich eine dazu passende Führungsfläche mit ringförmigen Führungsvorsprung 31 auf, wobei die ineinandergreifenden und aneinanderliegenden Führungselemente durch ein die Schwenkachse bildendes Verbindungsmittel zusammengehalten sind.

Die Schwenkachse 4 ist von einer Lagerbuchse 14 gebildet, die mit einem Flansch 15 an der Außenseite der Handhabe sich abstützt. Sie durchgreift die Handhabe 7 und das Sockelteil 6 und ist durch ein sich außenseitig des Sockelteils 6 (unten) abstützendes Befestigungsmittel fixierbar. Dieses Befestigungsmittel besteht aus einem ringförmigen oder zylindrischen Federelement 16 und einem dieses axial durchgreifenden Befestigungsmittel in Form eines Kopfbolzens 17, der in eine in der Lagerbuchse 14 unverdrehbar gehalterte Mutter 32 einschraubbar ist. Das Federelement 16 ist eine gewölbte Federscheibe, deren Mittelbereich abgestuft ist und fest gegen die Unterseite der Lagerbuchse 14 mittels des Kopfbolzens 17 anziehbar ist, während der Randbereich sich unter Federvorspannung an der Unterseite des Sockelteils 6 abstützt. In die Lagerbuchse 14 ist an ihrem mit Flansch 15 versehenen Ende ein Federelement 21 und ein unter der Vorspannung des Federelementes 21 axial zur Lagerbuchse verschiebliches Bedienteil 22 eingesetzt, das von einem Verriegelungsstift 23 quer durchsetzt ist. Der Verriegelungsstift 23 durchgreift die Lagerbuchse 14 quer zu ihrer Längsachse in parallel zu ihrer Längsachse gerichteten Langlöchern 25 und überragt die Lagerbuchse 14 radial mit beiden Enden. Mit diesen Enden greift der Verriegelungsstift 23 in axiale Arretierungsnuten 26, 26' durch die Lagerbuchse 14 radial umgebenden Bereiches der Lochung der Handhabe 7 ein. Hierdurch ist bei entlastetem Bedienteil 22 die Schwenkbeweglichkeit der Handhabe 7 in der Gebrauchslage oder in der Ruhelage unterbunden, während bei axial belastetem und verschobenem Bedienteil 22 die Enden des Verriegelungsstift es 23 unten außer Eingriff von den axialen Arretierungsnuten 26,26' sind und die Handhabe 7 entsprechend um die Lagerbuchse 14 schwenkbar ist.

Vorzugsweise besteht das Sockelteil 6 und der Handhabe 7 aus einem Duroplast, während die Lagerbuchse 14 und gegebenenfalls das Bedienteil 22 aus Thermoplast besteht. Dabei ist der Außendurchmesser der Lagerbuchse 14 in dem in die Mittellochung der Handhabe 7 des Stielgriffs 3 durchgreifenden Bereich mit kleinerem Durchmesser als die Mittellochung ausgebildet, so daß die Teile mit radialem Spiel ineinandergreifen.

Das die Gewindeausbildung 32 aufweisende Ende der Lagerbuchse 14 ist im Querschnitt als Polygon ausgebildet. Das Polygon ist mit 33 bezeichnet. Der Einsatzbereich in der Lochung des Sockelteils 6 ist formgleich ausgebildet, so daß die Teile drehfest zueinander gehalten sind.

Die Langlöcher 25 der Lagerbuchse 14 sind in dem ihrer Mündung naheliegenden Endbereich (in der Zeichnung oben) konisch oder keilförmig eingeengt. Die Einengung ist mit 34 bezeichnet. Hierdurch kann der Verriegelungsstift zunächst in den erweiterten Bereich mit Spiel eingreifen, bevor er dann in die Einengung 34 eindringt und damit spielfrei gehalten ist.

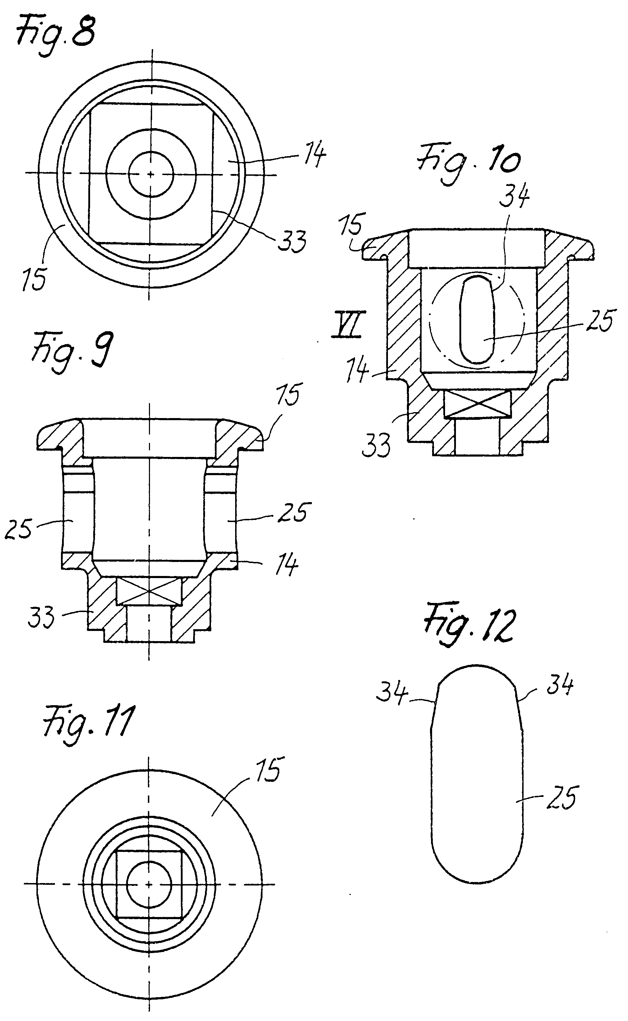

Die Axialnuten 26,26' des die Lagerbuchse 14 radial umgebenden Bereichs der Handhabe 7 sind paarweise einander gegenüberliegend angeordnet, wobei ein solches Paar von Arretierungsnuten 26, in welches der Verriegelungsstift 23 in der eingeschwenkten Ruhelage mit Spiel eingreift, durch Axialnuten gebildet ist, die parallel verlaufende Nutflanken aufweisen und somit eine einfache Montage und einen mit Spiel behafteten Sitz des Verriegelungsstiftes ermöglichen. Das zweite Paar von Arretierungsnuten 26', in welches der Verriegelungsstift 23 in der ausgeschwenkten Gebrauchslage eingreift, ist durch axial gerichtete Nuten gebildet, die zueinander konvergierende Nutflanken mindestens im der Griffoberseite zugewandten Endbereich aufweisen, wie insbesondere aus Figur 9 ersichtlich ist. In diese Nuten kann der Verriegelungsstift zunächst mit Spiel eingreifen, bis er dann in den Einengungsbereich gelangt und dort spielfrei gehalten ist.

Die Erfindung ist nicht auf das Ausführungsbeispiel beschränkt, sondern im Rahmen der Ansprüche vielfach variabel.

## Patentansprüche

1. Stielgriff für ein Geschirr, insbesondere Brat-, Back- oder Kochgeschirr, der mittels eines Befestigungselementes an der Wandung eines Geschirrs befestigbar ist, wobei der Stielgriff oder ein wesentlicher Teil des Stielgriffes um eine Hochachse aus einer vom Geschirr quer abragenden Gebrauchslage in eine etwa parallel oder tangential zur Geschirrwandung gerichtete oder in eine die Mündung oder Fläche des Geschirrs übergreifende Ruhelage schwenkbar ist, der Stielgriff aus einem am Geschirr befestigbaren Sockelteil und einer am Sockelteil schwenkbeweglich gehalterten Handhabe besteht, das Sockelteil eine Führungsfläche mit ringförmiger Führungsnut oder ringförmigem Führungsvorsprung aufweist, die zentrisch von der Schwenkachse durchsetzt ist, und die Handhabe an ihrem mit dem Sockelteil verbindbaren Endbereich eine dazu passende Führungsfläche mit Führungsvorsprung oder Führungsnut aufweist, wobei die ineinander greifenden und aneinanderliegenden Führungselemente durch ein die Schwenkachse bildendes Verbindungsmittel zusammen gehalten sind, **dadurch gekennzeichnet**, daß die Schwenkachse (4) von einer Lagerbuchse (14) gebildet ist, die mit einem Flansch (15) an der Außenseite der Handhabe (7) sich abstützt, Handhabe (7) und das Sockelteil (6) durchgreift und durch ein sich außenseitig des Sockelteils (6) abstützendes Befestigungsmittel fixierbar ist, daß das Befestigungsmittel aus einem ringförmigen oder zylindrischen Federelement (16) und einem dieses axial durchgreifenden Kopfbolzen (17), besteht, wobei das Federelement (16) eine gewölbte Federscheibe ist, deren Mittelbereich fest gegen die Unterseite der Lagerbuchse (14) mittels des Kopfbolzens (17) anziehbar ist und deren Randbereich sich unter Vorspannung an der Unterseite des Sockelteils (6) abstützt.

2. Stielgriff nach Anspruch 1, **dadurch gekennzeichnet**, daß die Hochachse (4) parallel zur Mittelachse (5) des Geschirrs (1) gerichtet oder leicht gegenüber der Mittelachse geneigt ist.

3. Stielgriff nach einem der Ansprüche 1 oder 2, **dadurch gekennzeichnet**, daß der Stielgriff (3) in den beiden möglichen Extremlagen arretierbar ist.

4. Stielgriff nach einem der Ansprüche 1 bis 3**, dadurch gekennzeichnet**, daß in die Lagerbuchse (14) an ihrem mit Flansch (15) versehenen Ende ein Federelement (21) und ein unter Vorspannung des Federelementes (21) axial zur Lagerbuchse verschiebliches Bedienteil (22), eingesetzt ist, das von einem Verriegelungsstift (23) quer durchsetzt ist, wobei der Verriegelungsstift (23) die Lagerbuchse (14) quer zu ihrer Längsachse in parallel zu ihrer Längsachse gerichteten Langlöcher (25) durchgreift und die Lagerbuchse (14) radial überragt, sowie in axiale Arretierungsnuten (26) des die Lagerbuchse (14) radial umgebenden Bereiches der Handhabe (7) eingreift, so daß bei entlastetem Bedienteil (22) die Schwenkbeweglichkeit der Handhabe (7) in der Gebrauchslage oder in der Ruhelage unterbunden ist und bei axial belastetem und verschobenem Bedienteil (22) die Enden des Verriegelungsstiftes (23) außer Eingriff von den axialen Arretierungsnuten (26) sind und die Handhabe (7) um die Lagerbuchse (14) schwenkbar ist.

5. Stielgriff nach Anspruch 4, **dadurch gekennzeichnet**, daß das Bedienteil (22) ein zylindrischer Druckknopf ist.

6. Stielgriff nach einem der Ansprüche 1 bis 5, **dadurch gekennzeichnet**, daß die aneinanderliegenden Führungsflächen von Sockelteil (6) und Handhabe (7) sowie von Flansch (15) und Handhabe (7) mit reibungsminderndem Material, beschichtet oder zwischen den Flächen Gleitscheiben (27) aus solchem Material angeordnet sind.

7. Stielgriff nach Anspruch 6, **dadurch gekennzeichnet**, daß das reibungsmindernde Material PTFE ist

8. Stielgriff nach einem der Ansprüche 1-7, **dadurch gekennzeichnet**, daß das Sockelteil (6) und der Handhabe (7) aus einem Duroplast und die Lagerbuchse 14) aus Thermoplast besteht, wobei der Außendurchmesser der Lagerbuchse (14) in dem in die Mittellochung der Handhabe (7) des Stielgriffs (3) durchgreifenden Bereich kleineren Durchmesser als die Mittellochung aufweist, so daß die Teile mit radialem Spiel ineinandergreifen.

9. Stielgriff nach Anspruch 8, **dadurch gekennzeichnet**, daß das die Gewindeausbildung (32) aufweisende Ende der Lagerbuchse (14) im Querschnitt als Polygon (33) ausgebildet und der Einsatzbereich in der Lochung des Sockelteils (6) formgleich ausgebildet ist.

10. Stielgriff nach Anspruch 8 oder 9, **dadurch gekennzeichnet**, daß die Langlöcher (25) der Lagerbuchse (14) mindestens in dem ihrer Mündung naheliegenden Endbereich konisch oder keilförmig eingeengt sind und der Verriegelungsstift (23) spielfrei in die Einengung eingreift.

11. Stielgriff nach Anspruch 8 bis 10, **dadurch gekennzeichnet**, daß die Arretierungsnuten (26'26')des die Lagerbuchse (14) radial umgebenden Bereiches der Handhabe (7) paarweise einander gegenüberliegend angeordnet sind, wobei ein solches Paar von Arretierungsnuten (26), in welchem der Verriegelungsstift (23) in der eingeschwenkten Ruhelage mit Spiel eingreift, durch Axialnuten gebildet ist, die parallel verlaufende Nutflanken aufweisen, während ein zweites Paar von Arretierungsnuten (26'), in welches der Verriegelungsstift (23) in der ausgeschwenkten Gebrauchslage eingreift, durch axial gerichtete Nuten gebildet ist, die zueinander konvergierende Nutflanken mindestens im der Griffoberseite zugewandten Endbereich aufweisen, zwischen welche der Verriegelungsstift (23) spielfrei einführbar ist.

## Claims

1. Shank-type handle for a utensil, in particular roasting, baking or cooking utensil, which can be attached by means of an attachment element to the wall of a utensil, the shank-type handle or a substantial part of the shank-type handle being swivellable around a vertical axis from a utilization position projecting transversely from the utensil into a rest position which is directed approximately parallel or tangentially to the utensil wall or into a rest position engaging across the mouth or surface of the utensil, the shank-type handle comprising a base part which can be attached to the utensil and a handle mounted on the base part and swivellably movable, the base part having a guide surface with annular guide groove or annular guide projection, which guide surface is centrally pierced by the swivel axis, and the handle having, at its end region which is connectable to the base part, a guide surface, suitable therefor, with guide projection or guide groove, the guide elements engaging in one another and adjacent to one another being held together by a joining means which forms the swivel axis, characterized in that the swivel axis (4) is formed by a bearing bush (14) which rests by means of a flange (15) on the outside of the handle (7), engages through the handle (7) and the base part (6) and can be fixed by an attachment means resting on the outside of the base part (6), in that the attachment means comprises an annular or cylindrical spring element (16) and a setbolt (17) which engages axially through the latter, the spring element (16) being a curved spring washer whose central region can be pulled firmly against the lower side of the bearing bush (14) by means of the setbolt (17) and whose peripheral region rests under pretension on the lower side of the base part (6).

2. Shank-type handle according to Claim 1, characterized in that the vertical axis (4) is directed parallel to the central axis (5) of the utensil (1) or is slightly inclined with respect to the central axis.

3. Shank-type handle according to either of Claims 1 or 2, characterized in that the shank-type handle (3) can be locked in the two possible extreme positions.

4. Shank-type handle according to one of Claims 1 to 3, characterized in that a spring element (21) and an operating part (22) which can be displaced axially with respect to the bearing bush while pretensioning the spring element (21) and which is transversely pierced by a locking pin (23) is inserted into the bearing bush (14) at its end provided with a flange (15), the locking pin (23) engaging through the bearing bush (14) transversely with respect to its longitudinal axis in elongated holes (25) directed parallel to its longitudinal axis and the bearing bush (14) projects radially and also engages in axial locking grooves (26) of that region of the handle (7) radially surrounding the bearing bush (14) so that, with the operating part (22) not under load, the swivelling mobility of the handle (7) into the utilization position or into the rest position is suppressed and, with the operating part (22) axially loaded and displaced, the ends of the locking pin (23) are out of engagement with the axial locking grooves (26) and the handle (7) can be swivelled around the bearing bush (14).

5. Shank-type handle according to Claim 4, characterized in that the operating part (22) is a cylindrical push-button.

6. Shank-type handle according to one of Claims 1 to 5, characterized in that the adjacent guide surfaces of base part (6) and handle (7) and also of the flange (15) and the handle (7) are coated with a friction-reducing material or sliding discs (27) made of such a material are disposed between the surfaces.

7. Shank-type handle according to Claim 6, characterized in that the friction-reducing material is PTFE.

8. Shank-type handle according to one of Claims 1-7, characterized in that the base part (6) and the handle (7) are composed of a thermoset and the bearing bush (14) is composed of a thermoplastic, the external diameter of the bearing bush (14) having a smaller diameter than the central perforation in the region engaging through the central perforation of the handle (7) of the shank-type handle (3) so that the parts engage in one another with radial play.

9. Shank-type handle according to Claim 8, characterized in that that end of the bearing bush (14) which has a threaded construction (32) is formed in cross section as a polygon (33) and the insertion region is constructed in an identical shape in the perforation of the base part (6).

10. Shank-type handle according to Claim 8 or 9, characterized in that the elongated holes (25) in the bearing bush (14) are tapered conically or in wedge-shape fashion at least in the end region adjacent to their mouth and the locking pin (23) engages in a play-free manner in the taper.

11. Shank-type handle according to Claims 8 to 10, characterized in that the locking grooves (26, 26') of that region of the handle (7) radially surrounding the bearing bush (14) are disposed opposite one another in pairs, such a pair of locking grooves (26) in which the locking pin (23) engages in the swivelled-in rest position with play being formed by axial grooves which have groove flanks projecting in parallel, while a second pair of locking grooves (26') in which the locking pin (23) engages in the swivelled-out utilization position being formed by axially directed grooves which have mutually converging groove flanks at least in the end region adjacent to the shank upper side between which groove flanks the locking pin (23) can be introduced in a play-free manner.

## Revendications

1. Poignée à manche pour des ustensiles de cuisine, notamment des ustensiles de cuisson pour faire cuire, frire ou bouillir des aliments, qui peut être fixée au moyen d'un élément de fixation sur la paroi d'un ustensile de cuisine, la poignée à manche ou une majeure partie de la poignée à manche pouvant être pivotée, autour d'un axe vertical, d'une position d'utilisation faisant saillie de l'ustensile transversalement à ce dernier dans une position de repos orientée environ parallèlement ou tangentiellement à la paroi de l'ustensile, ou bien recouvrant l'ouverture ou la surface de l'ustensile, la poignée à manche étant constituée d'une partie de socle pouvant être fixée sur l'ustensile et d'un manche fixé à pivotement sur la partie de socle, la partie de socle présentant une face de guidage à rainure de guidage annulaire ou à saillie de guidage annulaire, qui est traversée centralement par l'axe de pivotement, et le manche présentant, sur sa région terminale pouvant être assemblée à la partie de socle, une face de guidage correspondante, à saillie de guidage ou à rainure de guidage, les éléments de guidage en engagement mutuel et application mutuelle étant maintenus assemblés par un moyen d'assemblage formant l'axe de pivotement, **caractérisée** en ce que l'axe de pivotement (4) est formé par un coussinet (14), qui s'appuie par un collet (15) contre le côté extérieur du manche (7), traverse le manche (7) et la partie de socle (6) et peut être fixé en position par un moyen de fixation s'appuyant extérieurement contre la partie de socle (6), et en ce que le moyen de fixation est constitué d'un élément élastique (16) annulaire ou cylindrique et d'un axe à épaulement (17) traversant axialement cet élément, l'élément élastique (16) étant une rondelle élastique bombée, dont la région centrale peut être bloquée contre le côté inférieur du coussinet (14) au moyen de l'axe à épaulement (17), et dont la région de bord s appuie sous précontrainte contre le côté inférieur de la partie de socle (6).

2. Poignée à manche selon la revendication 1, **caractérisée** en ce que l'axe vertical (4) est orienté parallèlement à l'axe médian (5) de l'ustensile (1), ou est légèrement incliné par rapport à cet axe médian.

3. Poignée à manche selon la revendication 1 ou 2, **caractérisée** en ce que la poignée à manche (3) peut être verrouillée dans les deux positions extrêmes possibles.

4. Poignée à manche selon une des revendications 1 à 3, **caracterisée** en ce qu'un élément élastique (21) et un élément de manoeuvre (22), mobile axialement par rapport au coussinet sous la précontrainte de l'élément élastique (21), sont installés dans le coussinet (14) à son extrémité pourvue du collet (15), l'élément de manoeuvre (22) étant traversé transversalement par une goupille de verrouillage (23), la goupille de verrouillage (23) traversant le coussinet (14) transversalement à son axe longitudinal, dans des trous oblongs (25) orientés parallèlement à l'axe longitudinal, dépassant radialement du coussinet (14) et s'engageant dans des rainures axiales de verrouillage (26) de la région du manche (7) qui entoure radialement le coussinet (14), de sorte que, lorsque l'élément de manoeuvre (22) n'est pas sollicité, le manche (7) ne peut pas être déplacé par pivotement dans la position d'utilisation ou dans la position de repos et, lorsque l'élément de manoeuvre (22) est axialement sollicité et déplacé, les extrémités de la goupille de verrouillage (23) sont désengagées des rainures axiales de verrouillage (26), et le manche (7) peut être pivoté autour du coussinet (14).

5. Poignée à manche selon la revendication 4, **caractérisée** en ce que l'élément de manoeuvre (22) est un bouton-poussoir cylindrique.

6. Poignée à manche selon une des revendications 1 à 5, **caractérisée** en ce que les faces de guidage en application mutuelle de la partie de socle (6) et du manche (7), ainsi que du collet (15) et du manche (7), sont recouvertes d'un matériau réduisant le frottement, ou bien des rondelles de glissement (27) en un tel matériau sont disposées entre les faces.

7. Poignée à manche selon la revendication 6, **caractérisée** en ce que le matériau réduisant le frottement est du polytétrafluoréthylène.

8. Poignée à manche selon une des revendications 1 à 7, **caractérisée** en ce que la partie de socle (6) et le manche (7) sont réalisés en matériau thermodurcissable et le coussinet (14) en matériau thermoplastique, le diamètre extérieur du coussinet (14) étant, dans la région traversant le perçage central du manche (7) de la poignée à manche, inférieur au diamètre de ce perçage, de sorte que les pièces s'engagent l'une dans l'autre avec jeu radial.

9. Poignée à manche selon la revendication 8, **caractérisée** en ce que l'extrémité du coussinet (14) qui présente le filetage (32) est réalisée de section polygonale, et la région d'insertion dans le perçage de la partie de socle (6) est de forme identique.

10. Poignée à manche selon la revendication 8 ou 9, **caractérisée** en ce que les trous oblongs (25) du coussinet (14) sont, au moins dans leur région terminale proche de l'embouchure, rétrécis coniquement ou en forme de coin, et la goupille de verrouillage (23) s'engage sans jeu dans le rétrécissement.

11. Poignée à manche selon les revendications 8 à 10, **caractérisée** en ce que les rainures de verrouillage (26, 26') de la région du manche (7) qui entoure radialement le coussinet (14) sont disposées en vis-à-vis par paires, une première paire de rainures de verrouillage (26), dans laquelle la goupille de verrouillage (23) s'engage avec jeu dans la position de repos pivotée vers l'intérieur, étant formée par des rainures axiales qui présentent des flancs de rainures s'étendant en parallèle, tandis qu'une seconde paire de rainures de verrouillage (26'), dans laquelle la goupille de verrouillage (23) s'engage dans la position d'utilisation pivotée vers l'extérieur, est formée par des rainures orientées axialement qui présentent des flancs de rainure convergeant l'un vers l'autre au moins dans la région terminale tournée vers le côté supérieur de la poignée, flancs entre lesquels la goupille de verrouillage (23) peut être introduite sans jeu.
